# EUROPEAN PATENT SPECIFICATION

(11) **EP 3 687 771 B1**
(45) Date of publication and mention of the grant of the patent: **11.03.2026**
(21) Application number: 18901658.7
(22) Date of filing: 17.01.2018
(51) Int. Cl.: B29C 64/165, B29C 64/295, B29C 64/393, B33Y 10/00, B33Y 30/00, B33Y 50/02, B29C 35/08, B29C 64/282, B22F 10/28, B22F 10/36, B22F 10/38, B22F 12/13, B22F 12/42, B22F 12/45, B22F 12/47, B29C 64/277, B29C 35/02, B22F 10/362

(54) **MANUFACTURING A THREE-DIMENSIONAL OBJECT**
HERSTELLUNG EINES DREIDIMENSIONALEN OBJEKTES
FABRICATION D'UN OBJET TRIDIMENSIONNEL

(43) Date of publication of application: 05.08.2020
(73) Proprietor: Peridot Print LLC, Palo Alto, CA 94304 (US)
(72) Inventor: VEIS, Alex, 42505 Netanya (IL); COMAS CESPEDES, Esteve, 08174 Sant Cugat del Valles (ES); BRUGGE GARVI, Joaquim, 08174 Sant Cugat del Valles (ES)
(74) Representative: Haseltine Lake Kempner LLP
(86) International application number: PCT/US2018/013980
(87) International publication number: WO 2019/143324

(56) References cited:
- WO-A1-2016/072966
- WO-A1-2016/072966
- WO-A1-2017/011456
- WO-A1-2017/071760
- WO-A1-2017/220170
- WO-A1-2018/001491
- US-A1- 2017 021 454
- US-A1- 2017 072 627
- US-B2- 9 802 363

## Description

### BACKGROUND

Apparatus that generate three-dimensional objects, including those commonly referred to as "3D printers", provide a convenient way to produce three-dimensional objects. These apparatus typically receive a definition of a three-dimensional object in the form of an object model. This object model is processed to instruct the apparatus to produce the object using a particulate material or plural particulate materials. The object may be produced on a layer-by-layer basis. WO2017/071760A1 describes an additive manufacturing method using an energy source and varying build material spacings. WO2016/072966A1 describes a thermally decomposing material for three-dimensional printing. US9802363B2 describes a method for producing an object.

### SUMMARY

The scope of the invention is defined by the appended claims.

### BRIEF DESCRIPTION OF THE DRAWINGS

Various features of the present disclosure will be apparent from the detailed description which follows, taken in conjunction with the accompanying drawings, which together illustrate, by way of example, features of the present disclosure, and wherein:
Figure 1 is a schematic diagram of an additive manufacturing apparatus according to an example;
Figure 2 is a schematic diagram of an array of heat sources according to an example;
Figure 3 is a flow chart illustrating a method of fabricating a three-dimensional object according to an example; and
Figure 4 is a schematic diagram of a processor and a computer readable storage medium with instructions stored thereon according to an example.

### DETAILED DESCRIPTION

In the following description, for purposes of explanation, numerous specific details of certain examples are set forth. Reference in the specification to "an example" or similar language means that a particular feature, structure, or characteristic described in connection with the example is included in at least that one example, but not necessarily in other examples.

Additive manufacturing systems, otherwise referred to as "3D printing systems", may produce three-dimensional (3D) objects by solidifying successive layers of a build material. The build material may be in the form of a powder bed comprising, for example, plastic, metallic, or ceramic particles. In additive manufacturing systems, objects may be fabricated based on object data which may be, for example a 3D model of an object generated using a CAD computer program. The model data is processed into slices, each slice defining a portion of a layer of build material to be solidified.

Chemical agents, referred to herein as "printing agents", may be selectively deposited onto a layer of build material. In one example, the printing agents comprise a fusing agent and a detailing agent. The fusing agent and detailing agent may control a temperature of a bed of build material. The fusing agent may comprise an energy-absorbing chemical compound that acts to increase a temperature of a portion of build material. The detailing agent may comprise a cooling agent, such as a water-based liquid, that acts to reduce a temperature of a portion of build material. In this manner, a fusing agent may be selectively applied to a layer in areas where particles of the build material are to fuse together, and a detailing agent may be selectively applied where the fusing action is to be reduced. In some examples, a fusing agent is used but a detailing agent is not used. In some examples, the printing agents may comprise colorants and may be deposited on a white or colorless powder to color the powder. In other examples, objects may be constructed from layers of fused colored powder.

In some examples, the deposited printing agents comprise a binding material (or "binder"). A binding material is different from a fusing agent in that a fusing agent acts as an energy absorbing agent that causes build material on which it has been deposited to absorb more energy than the build material would absorb in the absence of fusing agent. A binding material or binder, on the other hand, chemically acts to draw build material together to form a cohesive whole.

For a given layer of build material to be solidified, energy may be applied during at least two different stages of the build process. Firstly, the layer of build material may be preheated. "Preheating" in this context refers to heating the build material before energy is subsequently applied to fuse the build material. During preheating, the build material may be heated to a temperature that is typically close to, but below the melting point or the sintering point for the build material. The printing agents described above may then be deposited onto the preheated build material. Following the deposition of the printing agents, energy may be applied to irradiate the printing agents, causing localized heating to a temperature above the melting point or sintering point of the build material, resulting in fusing of the build material.

A variety of types of radiation sources may be used to supply electromagnetic energy for the preheating and/or fusing stages of 3D object production in an additive manufacturing system. One type of radiation source is a light-emitting diode (LED). LEDs emit electromagnetic energy having a narrow spectral width. The spectral width of an emitter is defined as the range of wavelengths emitted by the emitter surrounding a center wavelength, at a power level equal to half the maximum power level. The center peak wavelength has the maximum intensity for the emission. Thus, an emitter with a narrow spectral width may emit electromagnetic radiation that is within a narrow range of the central wavelength. Such an emitter may be known as a narrowband emitter, and may have a spectral width of about 5 nm to about 50 nm. In contrast, a lamp energy source generally emits electromagnetic radiation having a large spectral width, and may have a spectral width of greater than about 100 nm. Hence, emissions having a large spectral width comprise electromagnetic energy spread over a wide wavelength range. A lamp may therefore be known as a wideband emitter. A laser, for example, comprises an extremely narrow spectral width, and may have a spectral width of less than about 5 nm. LEDs have a long lifetime compared to some energy sources, such as lamps, e.g. halogen lamps. Furthermore, LEDs allow simple DC operation, simple driving control, low voltage operation, and have no regulation issues with electromagnetic compatibility (EMC), radio-frequency interference (RFI), high voltage operation or UVC emissions.

Certain components of a 3D printing process, e.g. printing agents, may absorb electromagnetic energy within a well-defined range of wavelengths. In some examples, printing agents absorb electromagnetic energy within a well-defined range of ultraviolet wavelengths. Therefore, ultraviolet LEDs (UV-LEDs) may be used, in the fusing stage of production, in combination with a liquid which absorbs UV radiation. Using UV-LEDs enables the energy efficiency of the heating process to be increased because the wavelength and/or spectral width can be selected to match the absorption characteristics of the fluid. This maximizes the amount of energy that is absorbed. This is in contrast to systems where wideband energy sources are used. The use of wideband emitting energy sources are relatively energy-inefficient because certain wavelengths cannot be, or are poorly, absorbed by the fluids.

UV-LEDs provide particular benefits in color 3D printing systems. Some systems use wideband infra-red (IR) energy sources to fuse the particulate material. However, IR may be poorly absorbed by white and yellow colored fluids, such as colored ink, used in the color 3D printing process. Use of a UV-LED energy source, however, may cause the fluid temperature to rise faster than occurs when using wideband IR energy sources. If the fluid is heated at a faster rate, the fusion temperature can be achieved in a shorter time, which reduces the overall time for fabricating the 3D object.

Colored fluids, such as inks, currently used in color 3D printing have absorption bands within the UV spectrum. Thus, inks already have the ability to absorb energy emitted by UV radiation sources with high efficiency. Specific wavelengths and/or spectral widths can be selected to ensure that the energy is absorbed most effectively by the various fluid types. For example, CMYK printing fluids may each absorb UV energy to a different degree, so an optimal wavelength and/or spectral width may be selected to ensure the maximum amount of energy is absorbed by the printing fluids.

Some additive manufacturing systems allow particulate build material which is not fused for a given object slice, which may be referred to as "excess" or "residue" build material, to be re-used, e.g. for a subsequent object slice. However, some types of particulate material may cake or crust when heated. Caking may reduce the re-usability of the excess build material, and thereby cause wastage of print materials. Further, exposure of some build materials to UV radiation may affect the re-usability of such build materials. For example, plastic-based particulate build materials may be degraded due to prolonged UV exposure.

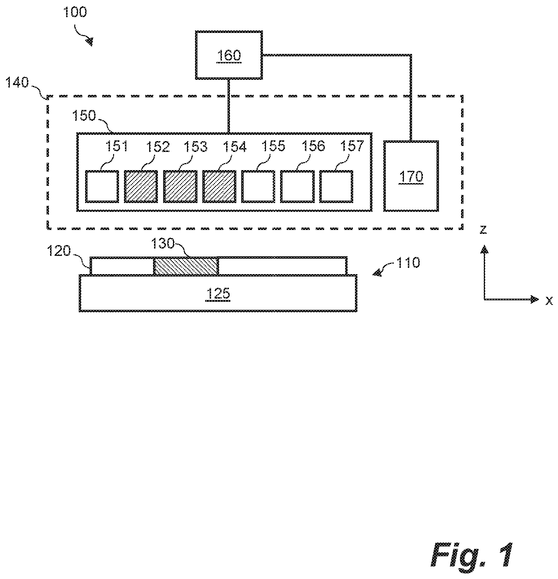

Figure 1 shows an additive manufacturing apparatus 100 according to an example. The additive manufacturing apparatus 100 may comprise or form part of a three-dimensional printing system, or "3D printer". Certain examples described herein may be implemented within the context of this additive manufacturing apparatus.

In the example of Figure 1, the additive manufacturing apparatus 100 comprises a build area 110. The build area 110 is to receive a layer of particulate material 120, For example, the particulate material 120 may be deposited in the build area 110. The particulate material 120, or "build material", comprises a powdered substrate in the example of Figure 1. The particulate material may comprise, for example, plastic, metallic, or ceramic particles. The particulate material 120 may comprise a powder-like material. In some examples, the material 120 may be formed from, or may comprise, short fibers that may, for example, have been cut into short lengths from long strands or threads of material. In this example, the build area 110 includes a build platform 125 arranged to hold the layer of particulate material 120. In some examples, the build area 110, material 120 and/or build platform 125 are separate from the additive manufacturing apparatus 100 and are only present in use.

In this example, the additive manufacturing apparatus 100 comprises a carriage 140. The carriage 140 may be moveable relative to the material 120. The carriage 140 may be configured to move in one, two or three dimensions over the material 120, for example horizontally along the x-axis direction indicated in Figure 1, along a y-axis, for example perpendicular to the plane of Figure 1, and in some examples vertically in the z-axis direction. In another case, the build platform 125 and material 120 may be moveable underneath a static carriage. Various combinations of approaches are possible.

The particulate material 120 may be deposited within the build area 110 by a substrate supply mechanism (not shown). The supply mechanism may comprise a material hopper. The supply mechanism may be configured to supply at least one layer of particulate material 120. In some examples, the substrate supply mechanism is separate and removable from the additive manufacturing apparatus 100, and may only be present in use.

In the additive manufacturing apparatus 100 of Figure 1, a three-dimensional object may be built up layer by layer. Each layer of material 120 may have a given thickness in the z-axis direction. In one case, the given thickness may be between 70 and 120 microns, although in other examples thicker or thinner layers may be formed. The additive manufacturing apparatus 100 may be arranged to solidify a predetermined portion 130 of the material 120 in a given layer.

The additive manufacturing apparatus 100 comprises an array 150 of LEDs. In this example, the array 150 is arranged on the carriage 140, although in other examples the array 150 is separate from the carriage 140. In the example shown in Figure 1, the array 150 is a one-dimensional array extending along the x-axis. In other examples, the array 150 is a two-dimensional array extending along both the x-axis and the y-axis. In other words, the array 150 may be arranged on an x-y plane that is parallel to, but positioned above, the build platform 125.

The array 150 comprises a plurality of array segments 151-157. Although seven array segments are depicted in Figure 1, other numbers of segments may be used in other examples. Each array segment may comprise a predetermined number of adjacent LEDs in the array 150. In other words, each array segment may comprise a sub-array of LEDs. A given array segment may comprise a plurality of LEDs.

Each array segment is controllable independently of any other array segment. The LEDs of the array 150 are thus divided into individually addressable groups. Grouping the LEDs into individually addressable array segments enables a power emission density of the array 150 to be increased compared to a case in which every LED in the array is individually addressable, for the reasons explained below.

In an example, each LED comprises a die that is 1 mm x 1 mm in size, and the LEDs may be driven with a current of 1.5 amps per LED. Such a current may involve using a wire, such as a copper wire, of relatively large diameter. An array of LEDs may comprise many LEDs, for example 720 LEDs, and each LED may have a respective connector with two connections (anode and cathode). Individual connectivity of every LED may therefore involve using 1440 wires, along with a connector with 1440 pins. Such a large number of wires and pins involves a large amount of space between LEDs in the array, thus reducing the density of the LEDs in the array. For a 90 mm x 50 mm board retaining 720 LEDs that are individually addressable, a "fill factor" of the board space (defining a portion of the board filled by LEDs) may be around 10% (that is, 10% of the area of the board is occupied by LEDs and the remaining 90% is occupied by wires and other components). The density of the LEDs, or the power emission density of the array (in W/cm²) may thus be undesirably low if every LED in the array is individually addressable. Grouping the LEDs into individually addressable array segments, however, so that each array segment is controllable independently of any other array segment, reduces the number of wires used, thereby allowing the power emission density of the array, and the packing density of the LEDs themselves, to be increased because wire connections may be provided for each array segment, rather than for each individual LED. For example, the "fill factor" of the board space for grouped LEDs may be 50% or 70%, depending on the number of LEDs in each array segment.

In some examples, a given LED in the array 150 comprises a UV-LED. In one case, every LED in the array 150 comprises a UV-LED. A UV-LED may have a peak emission wavelength of between 380 and 400 nanometers according to some examples. UV-LEDs that emit energy within this range are relatively inexpensive compared to other wavelength LEDs. Such UV-LEDs also have no UVC regulation issues because they do not emit energy within the UVC wavelength range of 100-280nm. In one case, a UV-LED comprised in the array 150 has a peak emission wavelength of about 390 nanometers. This wavelength may provide a good balance between cost and radiation power.

The additive manufacturing apparatus 100 further comprises a controller 160. The controller 160 is implemented using machine readable instructions and suitably programmed or configured hardware, e.g. circuitry. The controller 160 can control at least some of the various components of the additive manufacturing apparatus 100. In some examples, the various components each have their own controller which may operate independently of each other, or in cooperation.

The controller 160 is configured to identify a portion 130 of the layer of particulate material 120 contained in the build area 110. The portion 130 may be identified based on received object data corresponding to a slice of a three-dimensional object to be manufactured. For example, the portion 130 may correspond to a cross-section taken at a given z-position of the three-dimensional object to be manufactured. The portion 130 corresponds to an area of the layer of material 120 upon which a fusing agent is to be deposited, as described in more detail below.

The controller 160 is configured to select an array segment from the plurality of array segments 151-157 on the basis of the identified portion 130. The controller 160 may select multiple segments from the plurality of segments 151-157. In this example, the controller 160 selects a first array segment 152, a second array segment 153 and a third array segment 154 on the basis of the identified portion 130.

The controller 160 is configured to cause activation of LEDs in the selected array segment to preheat at least the identified portion 130. As such, preheating may be performed prior to deposition of a fusing agent onto the identified portion 130. However, the entire layer of build particulate material 120 is not preheated, due to the activation of LEDs in the selected array segment(s) but not every array segment.

In the example shown in Figure 1, the additive manufacturing apparatus 100 comprises a print head 170. The print head 170 is arranged to selectively deposit a fusing agent. The print head 170 may be communicatively coupled to the controller 160. The print head 170 may comprise one or more nozzles configured to deposit the fusing agent onto the material 120. The ejection mechanism may be based on piezo-electric or thermal elements. In this example, the print head 170 is arranged on the carriage 140, alongside the array 150. In other examples, the print head 170 is arranged separately from the carriage 140. For example, the array 150 may be arranged on a first carriage and the print head may be arranged on a second, different carriage.

In some examples, the controller 160 is configured to de-activate the LEDs in the selected array segment in response to a determination that the identified portion 130 is preheated. For example, a temperature sensor may be used to measure a temperature of the identified portion 130, and the controller 160 may determine that the identified portion 130 is preheated based on such measurements indicating that the temperature of the identified portion 130 meets or exceeds a predetermined threshold temperature. In some examples, the controller 160 is configured to activate the LEDs in the selected array segment to heat the identified portion 130 for a predetermined amount of time. The predetermined amount of time may depend upon, for example, the type of particulate material used, the type of LED used, the power applied to the LEDs and the distance between the LEDs in the array and the particulate material 120. As such, it may be determined that for a given type of particulate material and LED, driven with a given power and arranged a given distance from the material 120, the material 120 takes a particular time to reach a predetermined preheating temperature. Upon expiry of such a time after activating the LEDs, the LEDs may be de-activated.

In some examples, the controller 160 is configured to cause the print head 170 to deposit the fusing agent onto the preheated portion of the layer of particulate material. The print head 170 may deposit the fusing agent onto the preheated portion after the LEDs in the selected array segment have been de-activated.

In one case, the fusing agent comprises a color pigment. "Color" used in this context includes black, white and gray. As such, the fusing agent is not colorless in this case. In other words, the fusing agent may comprise a colored fluid. The fusing agent comprises a radiation-absorbing component to absorb radiation to generate heat which fuses the build material upon which the fusing agent is deposited. The radiation-absorbing component may be the color pigment in some examples. In some cases, the radiation-absorbing component absorbs UV radiation.

In some examples, the controller 160 is configured to re-activate the LEDs in the selected array segment to heat the deposited fusing agent. Heating the deposited fusing agent allows fusing of the identified portion 130 of the layer of particulate material. As such, the LEDs in the selected array segment may be used more than once in the production of a layer of a 3D object. Namely, the LEDs in the selected array segment may be used firstly for preheating of particulate material and secondly for applying radiation to a deposited fusing agent. In other examples, a first selected array segment is used for preheating and a second, different selected array segment is used for applying radiation to the deposited fusing agent.

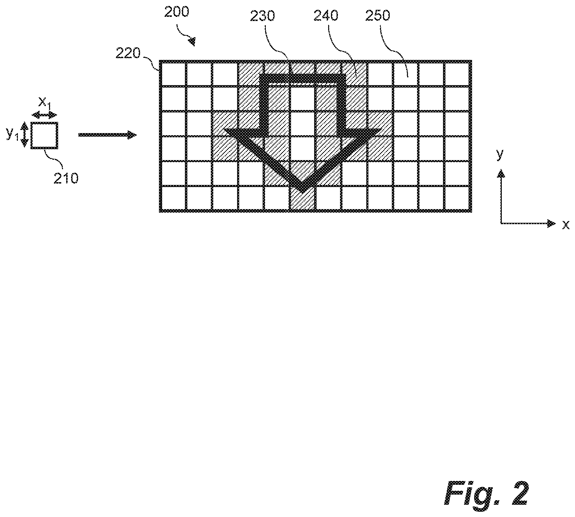

Figure 2 is a schematic diagram 200 showing a top-down view of an array 220 of heat sources relative to a build area positioned below the array 220, according to an example. The array 220 may be comprised in an additive manufacturing apparatus such as the additive manufacturing apparatus 100 of Figure 1. Radiation emitted from the array 220 may be able to address the whole surface of the build area, for example where the array 220 is static. In some examples, the array 220 is arranged on a carriage that is moveable relative to the build area. Where the array 220 is moveable over the build area, i.e. in a scanning system, each heat source may be activated at a particular point in the scan axis to obtain an increased heating resolution in the direction of the scan. In a scanning system, heating may be based on a determined distance from a portion of the build material on which fusing agent has been applied. As such, a constraint of having regular-shaped heating portions may not be applicable in such a scanning system.

In some examples, where the array 220 is arranged on a moveable carriage, activation of selected heat sources is controlled during movement of the moveable carriage. Power control signals may be sent from a controller to activate and/or deactivate the heat sources in the array 220. The controller may control the time at which a power control signal is sent to a given heat source. As such, a particular coordinate of the build area may be targeted by having the controller send a power control signal to activate a selected heat source at a time at which the moveable carriage moves to the particular coordinate.

Each heat source in the array 220 comprises an LED, e.g. a UV-LED. In this example, each heat source in the array 220 comprises a plurality of LEDs. As such, the array 220 of heat sources may be considered as an array of LEDs divided into segments, each segment comprising a plurality of LEDs and corresponding to a discrete heat source. A given segment 210 of the array 220 may have a characteristic size, *x₁ x y₁,* where *x₁* and *y₁* are distances along the x and y axis, respectively. In this example, the given segment 210 is rectangular in shape. The segments of the array 220 can have other shapes in other examples. The size of the given segment 210 may be considered as a minimum size of a group of LEDs that can be collectively controlled, e.g. turned on or off.

LEDs in an array may be inter-connected in series to form strings of LEDs. A current may be driven through a given string of LEDs. In an individually addressable segment of the array, e.g. the given segment 210 of Figure 2, the number of rows of LEDs in the segment may correspond to the number of LED strings in the segment. As such, a given segment may comprise multiple LED strings, each corresponding to a row of LEDs in the segment. The number of columns of LEDs in the segment may correspond to the number of LEDs in each string.

In some examples, the segments of the array 220 are uniformly sized. That is, each segment may comprise a same number of LEDs in a same arrangement. In other examples, the segments of the array 220 are non-uniformly sized. For example, a first segment may comprise a first number of LEDs and a second segment may comprise a second, different number of LEDs. In some examples, different segments may comprise a same number of LEDs but in different arrangements. For example, a first segment may comprise a 4 x 4 set of LEDs and a second segment may comprise a 2 x 8 set of LEDs, the first and second segments thereby having the same number of LEDs but in different configurations.

Each segment of the array 220 is individually addressable, e.g. by a controller, such that each segment may be controlled independently of any other segment in the array 220. For example, each segment may have separate control electronics and/or circuitry to enable independent control.

A pattern 230, depicted as a black arrow shape in the schematic diagram 200 of Figure 2, corresponds to a slice of a three-dimensional object to be manufactured from build material deposited on the build area. The slice may be, for example, a cross-section of the three-dimensional object to be manufactured taken at a given point along the z-axis (into the page of Figure 2). The pattern 230 corresponds to an area of a layer of build material upon which a fusing agent is to be deposited. Based on the properties of the pattern 230, e.g. the size and shape of the pattern 230, segments of the array 220 are selectively activated and/or deactivated in order to heat a region of a layer of build material.

According to the invention, a first plurality of segments 240 of the array 220 is activated in order to heat a region including the pattern 230. A second plurality of segments 250 of the array 220 is not activated. As such, LED illumination is not applied across the entire layer of build material. In this example, a majority of the layer of build material is not to be printed or fused. The area of the pattern 230 is to be printed and fused for the present layer. The first plurality of segments 240 may be the minimal set of segments 240 that are useable to illuminate the pattern 230.

The selective activation of segments of the array 220 causes illumination of a region of a layer of build material, the region including the pattern 230 and an area around the pattern 230. Illumination of the area around the pattern 230 may be referred to as "blooming".

In some examples, the size of the segments of the array 220 may be configured based on a property of the blooming area, the blooming area corresponding to the area around the pattern 230 that is illuminated. The property of the blooming area may be a maximum acceptable blooming area, for example. The size of the array segments may be reduced, thereby increasing the effective resolution of the array, in order to control an amount of blooming. There may be a trade-off in the size of the segments, therefore, between reducing the blooming area (by reducing the size of the array segments) and increasing the power emission density of the array (by increasing the size of the array segments).

In some examples, a minimal blooming area is defined. The minimal blooming area may be defined based on the size of the segments of the array 220, which may in turn be determined to achieve a predetermined power emission density. For example, it may be determined that a 4 x 4 segment is the minimum segment size to obtain a desired power emission density of the array 220. Therefore, the minimal blooming area of the array 220 is defined on the basis of a 4 x 4 array segment.

Selective activation of segments of the array 220 may be used for both preheating of build material prior to depositing a fusing agent onto the build material, and for applying radiation to the deposited fusing agent. The fusing agent may comprise a colored printing fluid. In some examples, the fusing agent comprises a black or dark colored printing fluid. The fusing agent may be deposited selectively in accordance with the pattern 230. As such, a region including the pattern 230 and an area around the pattern 230 may be preheated using selected segments of the array 220, a fusing agent may then be deposited onto the pattern area (which is part of the preheated region), and the region including the pattern 230 and the area around the pattern 230 may then be irradiated using selected segments of the array 220 to cause fusing of the pattern area.

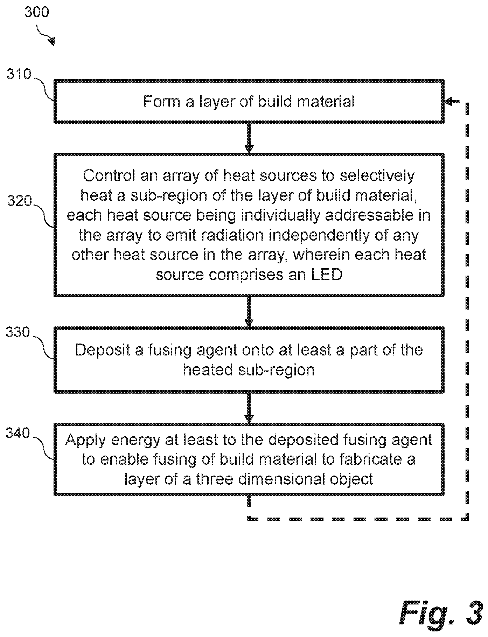

Figure 3 shows a method 300 of fabricating a three-dimensional object according to an example. In some examples, the method 300 is performed by a controller of an additive manufacturing system, such as the controller 160 of Figure 1. The controller may perform the method based on instructions retrieved from a computer-readable storage medium. The method 300 may be performed in accordance with an additive manufacturing apparatus such as the additive manufacturing apparatus 100 of Figure 1.

At item 310, a layer of build material is formed. The layer of build material may be formed in a build zone, for example on a build platform of a 3D printing system. In some examples, the build material is a particulate material. Forming the layer of build material may comprise depositing or dispensing the layer on a build platform. In some examples, forming the layer of build material comprises spreading the build material over the build zone.

At item 320, an array of heat sources is controlled to selectively heat a sub-region of the layer of build material. A "sub-region" refers herein to a portion of the layer of build material that is smaller than the total area of the layer of build material. In some examples, however, the array of heat sources is used to heat the entire layer of build material. Each heat source comprises an LED. The LED may be a UV-LED. In some examples, each heat source comprises a plurality of LEDs. The plurality of LEDs of a given heat source may correspond to a segment, portion or sub-array of an overall LED set. In other examples, each heat source comprises a single LED. In some examples, each heat source in the array of heat sources comprises a same number of LEDs.

Each heat source is individually addressable in the array to emit radiation independently of any other heat source in the array.

In some examples, data is obtained, representative of a layer of a 3D object to be fabricated. A heat source is selected from the array of heat sources on the basis of the obtained data. The selected heat source is activated, and a further heat source in the array is not activated, to selectively heat the sub-region of the layer of build material. In some cases, multiple heat sources are selected from the array and activated to selectively heat the sub-region.

At item 330, a fusing agent is deposited onto at least a part of the heated sub-region of the layer of build material. As such, the fusing agent is deposited after the array of heat sources are used to selectively heat the sub-region of the layer of build material. In some examples, the fusing agent is deposited onto a first part of the heated sub-region and not onto a second part of the heated sub-region. The heated sub-region may therefore include, and extend beyond, an area upon which the fusing agent is deposited.

At item 340, energy is applied at least to the deposited fusing agent. The applied energy enables the fusing of build material to fabricate a layer of the three-dimensional object. In an example, energy is applied to the deposited fusing agent and to an area around the deposited fusing agent, but not to other areas of the build material.

In some examples, applying energy to the deposited fusing agent comprises controlling the array of heat sources to heat the deposited fusing agent. The array of heat sources may therefore be used both for heating of the sub-region prior to depositing of the fusing agent, and for subsequent heating of the fusing agent to fuse the build material. In an example, energy is applied uniformly across the build material layer to heat the fusing agent. In another example, energy is applied selectively, for example by selectively activating one or more independently controllable heat sources from the array. In some examples, applying energy to the deposited fusing agent comprises using a separate energy source from the array of heat sources that are used to heat the deposited fusing agent. The separate energy source may be arranged to apply energy uniformly across the build area, or selectively to selected portions of the build area.

In some examples, a first amount of radiation is applied to heat the sub-region prior to depositing the fusing agent, and a second amount of radiation is applied to heat the deposited fusing agent. The second amount of radiation may be higher than the first amount of radiation. For example, a first amount of power may be applied to the array of heat sources to heat the sub-region prior to depositing the fusing agent, and a second amount of power may be applied to the array to heat the deposited fusing agent. Applying different powers to the array of heat sources enables the sub-region to be preheated to a first temperature, below the melting point of the build material, and the fusing agent to be heated to a second, higher temperature, above the melting point of the build material. Applying different powers may involve driving the array with different currents and using a constant potential difference, varying the potential difference and maintaining a constant current, or varying both the applied current and the potential difference.

In some examples, a same power is applied to the array for both the preheating and the fusing stages. For example, the build material may absorb radiation from the heat sources less effectively than the fusing agent absorbs radiation from the heat sources. As such, a constant power may be used, but the build material in the preheating stage may be heated to a first temperature, e.g. below the melting point of the build material, and the fusing agent in the fusing stage may be heated to a second, higher temperature, e.g. above the melting point of the build material.

The items 310-340 of the method 300 may be repeated for successive layers of the 3D object to be fabricated, as indicated by the dashed arrow in Figure 3.

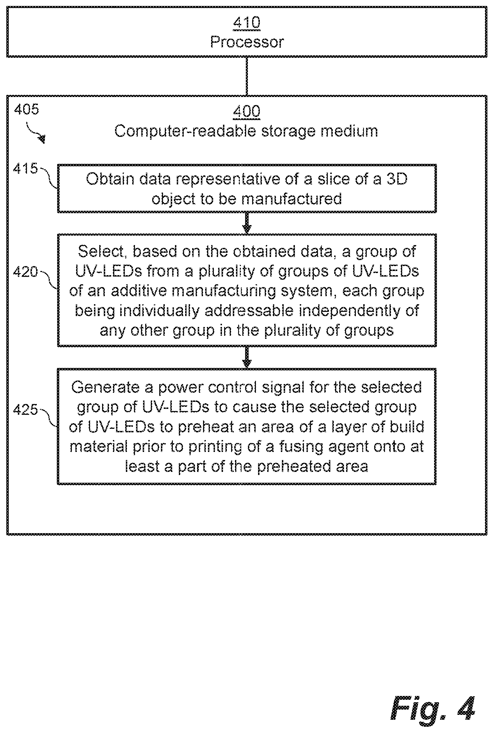

Figure 4 shows a non-transitory computer-readable storage medium 400 comprising a set of computer-readable instructions 405. The computer-readable storage medium 400 is connectably coupled to a processor 410 of an additive manufacturing system. The additive manufacturing system may comprise an additive manufacturing apparatus similar to the additive manufacturing apparatus 100 of Figure 1. The set of computer-readable instructions 405 may be executed by the processor 410.

Instruction 415 instructs the processor 410 to obtain data representative of a slice of a 3D object to be manufactured, e.g. by an additive manufacturing system. The data may be stored in memory within the additive manufacturing system, for example. Alternatively, the data may be stored in memory external to the additive manufacturing system.

Instruction 420 instructs the processor 410 to select, based on the obtained data representative of the slice, a group of ultraviolet light-emitting diodes, UV-LEDs, from a plurality of groups of UV-LEDs of the additive manufacturing system. Each group in the plurality of groups is individually addressable independently of any other group in the plurality of groups. For example, each group in the plurality of groups may be individually addressable by the processor 410.

Instruction 425 instructs the processor 410 to generate a power control signal for the selected group of UV-LEDs. The power control signal is to cause the selected group of UV-LEDs to preheat an area of a layer of build material. The preheated area may include a portion of the layer of build material corresponding to the slice of the 3D object to be manufactured. In some examples, the preheated area is larger than, e.g. extends beyond, the portion corresponding to the slice of the 3D object. The selected group of UV-LEDs preheat the area prior to printing of a fusing agent onto at least a part of the preheated area. In some examples, the fusing agent is printed onto the portion of the layer of build material corresponding to the slice of the 3D object to be manufactured, which may be a part of or all of the preheated area. The selected group of UV-LEDs may be further used to selectively apply radiation to the printed fusing agent to cause fusing of the build material.

Processor 410 can include a microprocessor, microcontroller, processor module or subsystem, programmable integrated circuit, programmable gate array, or another control or computing device. The computer-readable storage medium 400 can be implemented as one or multiple computer-readable storage media. The computer-readable storage medium 400 includes different forms of memory including semiconductor memory devices such as dynamic or static random access memory modules (DRAMs or SRAMs), erasable and programmable read-only memory modules (EPROMs), electrically erasable and programmable read-only memory modules (EEPROMs) and flash memory; magnetic disks such as fixed, floppy and removable disks; other magnetic media including tape; optical media such as compact disks (CDs) or digital video disks (DVDs); or other types of storage devices. The computer-readable instructions 405 can be stored on one computer-readable storage medium, or alternatively, can be stored on multiple computer-readable storage media. The computer-readable storage medium 400 or media can be located either in an additive manufacturing system or located at a remote site from which computer-readable instructions can be downloaded over a network for execution by the processor 410.

Certain examples described herein enable build material that is not fused to form a given slice of a 3D object to be re-used for a subsequent slice (or for a subsequent 3D print job). An amount of heating of build material that is not to be fused, for example in regions of a layer of build material where a fusing agent is not to be applied, may be reduced, by selectively controlling an individually addressable array of heat sources. Reducing the heating of such "excess" build material may reduce caking of the build material, thereby increasing the re-usability of the build material. Re-using build material that is not fused for a given slice reduces wastage of print materials in a 3D printing system.

Certain examples described herein allow a 3D printing system to be simplified. A single radiation source may be used for both pre-heating of build material and fusing of the build material. UV-LEDs are an effective source of radiation for the fusing stage, as UV energy may be absorbed effectively and directly by the color pigment of printing fluids or inks. A separate additive or fluid, e.g. a colorless fluid, whose purpose is to absorb the electromagnetic energy for fusing, may not be used in some examples, thereby further increasing simplicity and reducing cost. By using an array of individually addressable groups of UV-LEDs to selectively preheat a sub-region of a layer of build material, the UV-LEDs may be used for both preheating and fusing stages whilst reducing degradation or damage of the build material caused by exposure to UV radiation. By reducing the effects of exposure to UV radiation, the re-usability of the build material may be further increased.

Certain examples described herein enable a power consumption of a 3D printing system to be reduced. By controlling an array of heat sources that are individually addressable to selectively heat sub-regions of a layer of build material, less power may be consumed compared to a case in which the entire layer of build material is heated. Further, an amount of energy to be exhausted from the 3D printing system, for example due to excess heating, may be reduced.

Certain examples described herein enable a useable lifetime of an array of LEDs to be increased. By grouping the array into individually addressable segments and selectively activating those segments, the average amount of time that a given LED in the array is in an activated state over the course of a 3D print job may be reduced. As well as reducing power consumption, the lifetime of that LED is therefore also increased. Further, by increasing the useable lifetime of LEDs in the array, a frequency of servicing, e.g. to replace non-functioning LEDs, may be reduced, thereby reducing an amount of system downtime and increasing reliability.

The preceding description has been presented to illustrate and describe examples of the principles described.

## Claims

1. A method (300) of fabricating a three dimensional object, the method comprising:
forming (310) a layer of build material;
controlling (320) an array (220) of heat sources to selectively heat a sub-region of the layer of build material by activating a first plurality of segments (240) of the array (220), the sub-region including an area upon which fusing agent is to be deposited and each heat source being individually addressable in the array (220) to emit radiation independently of any other heat source in the array (220), wherein each heat source comprises a light-emitting diode, LED, wherein a second plurality of segments (250) of the array (220) is not activated such that LED illumination is not applied across the entire layer of build material;
depositing (330) a fusing agent onto at least a part of the heated sub-region;
and
applying (340) energy at least to the deposited fusing agent to enable fusing of build material to fabricate a layer of the three dimensional object.

2. The method of claim 1, wherein each heat source comprises a plurality of LEDs.

3. The method of claim 1, wherein the LED is an ultraviolet LED, UV-LED.

4. The method of claim 1, wherein each heat source in the array of heat sources comprises a same number of LEDs.

5. The method of claim 1, wherein controlling the array of heat sources comprises:
obtaining data representative of a layer of the three dimensional object to be fabricated;
selecting a heat source from the array of heat sources on the basis of the obtained data; and
activating the selected heat source and not activating a further heat source in the array to selectively heat the sub-region of the layer of build material prior to depositing the fusing agent.

6. The method of claim 1, comprising depositing the fusing agent onto a first part of the heated sub-region and not onto a second part of the heated sub-region.

7. The method of claim 1, wherein applying energy to the deposited fusing agent comprises controlling the array of heat sources to heat the deposited fusing agent.

8. The method of claim 1, the method comprising:
applying a first amount of radiation to heat the sub-region prior to depositing the fusing agent; and
applying a second amount of radiation to heat the deposited fusing agent, the second amount of radiation being higher than the first amount of radiation.

9. Additive manufacturing apparatus (100) comprising:
an array (150) of light-emitting diodes, LEDs, the array (150) comprising a plurality of array segments (151-157), each array segment being controllable independently of any other array segment; and
a controller (160) to:
identify a portion (130) of a layer of particulate material (120) upon which fusing agent is to be deposited contained in a build area (110);
select an array segment from the plurality of array segments (151-157) on the basis of the identified portion (130); and
cause activation of LEDs in the selected array segment to preheat at least the identified portion (130) prior to deposition of a fusing agent onto the identified portion (130), wherein a second array segment (250) is not activated such that LED illumination is not applied across the entire layer of build material.

10. The additive manufacturing apparatus of claim 9, wherein a given LED in the array of LEDs comprises an ultraviolet LED, UV-LED.

11. The additive manufacturing apparatus of claim 10, wherein the UV-LED has a peak emission wavelength of between 380 and 400 nanometers.

12. The additive manufacturing apparatus of claim 9, wherein the array of LEDs are comprised in a moveable carriage arranged to move relative to the build area.

13. The additive manufacturing apparatus of claim 9, comprising a print head to selectively deposit the fusing agent, the print head being communicatively coupled to the controller, wherein the controller is to:
de-activate the LEDs in the selected array segment in response to a determination that the identified portion of the layer of particulate material is preheated;
cause the print head to deposit the fusing agent onto the preheated portion of the layer of particulate material; and
re-activate the LEDs in the selected array segment to heat the deposited fusing agent and allow fusing of the identified portion of the layer of particulate material.

14. The additive manufacturing apparatus of claim 9, wherein the fusing agent comprises a color pigment.

15. A non-transitory machine readable medium comprising instructions which, when loaded into memory and executed by the controller (160) of the additive manufacturing system of claim 9, cause the system to:
identify a portion (130) of a layer of particulate material (120) upon which fusing agent is to be deposited contained in a build area (110);
select a first array segment (240) from the plurality of array segments (151-157) on the basis of the identified portion (130); and
cause activation of LEDs in the selected array segment to preheat at least the identified portion (130) prior to deposition of a fusing agent onto the identified portion (130), wherein a second array segment (250) is not activated such that LED illumination is not applied across the entire layer of build material.

## Patentansprüche

1. Verfahren (300) zum Herstellen eines dreidimensionalen Objekts, wobei das Verfahren umfasst:
Ausbilden (310) einer Schicht aus Aufbaumaterial;
Steuern (320) einer Anordnung (220) von Wärmequellen zum selektiven Erwärmen eines Teilbereichs der Schicht aus Aufbaumaterial durch Aktivieren einer ersten Vielzahl von Segmenten (240) der Anordnung (220), wobei der Teilbereich einen Bereich einschließt, auf den Schmelzmittel abgeschieden werden soll, und jede Wärmequelle in der Anordnung (220) einzeln adressierbar ist, um Strahlung unabhängig von jeder anderen Wärmequelle in der Anordnung (220) abzugeben, wobei jede Wärmequelle eine Leuchtdiode, LED, umfasst, wobei eine zweite Vielzahl von Segmenten (250) der Anordnung (220) nicht aktiviert wird, so dass LED-Beleuchtung nicht über die gesamte Schicht aus Aufbaumaterial angewendet wird;
Abscheiden (330) eines Schmelzmittels auf mindestens einen Teil des erwärmten Teilbereichs; und
Anwenden (340) von Energie mindestens auf das abgeschiedene Schmelzmittel, um ein Schmelzen von Aufbaumaterial zu ermöglichen, um eine Schicht des dreidimensionalen Objekts herzustellen.

2. Verfahren nach Anspruch 1, wobei jede Wärmequelle eine Vielzahl von LEDs umfasst.

3. Verfahren nach Anspruch 1, wobei die LED eine Ultraviolett-LED, UV-LED, ist.

4. Verfahren nach Anspruch 1, wobei jede Wärmequelle in der Anordnung von Wärmequellen eine gleiche Anzahl von LEDs umfasst.

5. Verfahren nach Anspruch 1, wobei das Steuern der Anordnung von Wärmequellen umfasst:
Erhalten von Daten, die für eine Schicht des herzustellenden dreidimensionalen Objekts repräsentativ sind;
Auswählen einer Wärmequelle aus der Anordnung von Wärmequellen auf der Grundlage der erhaltenen Daten; und
Aktivieren der ausgewählten Wärmequelle und Nichtaktivieren einer weiteren Wärmequelle in der Anordnung, um den Teilbereich der Schicht aus Aufbaumaterial vor dem Abscheiden des Schmelzmittels selektiv zu erwärmen.

6. Verfahren nach Anspruch 1, das ein Abscheiden des Schmelzmittels auf einen ersten Teil des erwärmten Teilbereichs und nicht auf einen zweiten Teil des erwärmten Teilbereichs umfasst.

7. Verfahren nach Anspruch 1, wobei das Anwenden von Energie auf das abgeschiedene Schmelzmittel ein Steuern der Anordnung von Wärmequellen zum Erwärmen des abgeschiedenen Schmelzmittels umfasst.

8. Verfahren nach Anspruch 1, wobei das Verfahren umfasst:
Anwenden einer ersten Strahlungsmenge zum Erwärmen des Teilbereichs vor dem Abscheiden des Schmelzmittels; und
Anwenden einer zweiten Strahlungsmenge zum Erwärmen des abgeschiedenen Schmelzmittels, wobei die zweite Strahlungsmenge höher ist als die erste Strahlungsmenge.

9. Additivfertigungseinrichtung (100), das umfasst:
eine Anordnung (150) von Leuchtdioden, LEDs, wobei die Anordnung (150) eine Vielzahl von Anordnungssegmenten (151 bis 157) umfasst, wobei jedes Anordnungssegment unabhängig von jedem anderen Anordnungssegment steuerbar ist; und
eine Steuerung (160) zum:
Identifizieren eines Abschnitts (130) einer Schicht aus Partikelmaterial (120), auf den Schmelzmittel abgeschieden werden soll, der in einem Aufbaubereich (110) enthalten ist;
Auswählen eines Anordnungssegments aus der Vielzahl von Anordnungssegmenten (151 bis 157) auf der Grundlage des identifizierten Abschnitts (130); und
Verursachen einer Aktivierung von LEDs in dem ausgewählten Anordnungssegment, um mindestens den identifizierten Abschnitt (130) vor der Abscheidung eines Schmelzmittels auf den identifizierten Abschnitt (130) vorzuwärmen, wobei ein zweites Anordnungssegment (250) nicht aktiviert wird, so dass LED-Beleuchtung nicht über die gesamte Schicht aus Aufbaumaterial angewendet wird.

10. Additivfertigungseinrichtung nach Anspruch 9, wobei eine gegebene LED in der Anordnung von LEDs eine Ultraviolett-LED, UV-LED, umfasst.

11. Additivfertigungseinrichtung nach Anspruch 10, wobei die UV-LED eine Peak-Emission-Wellenlänge zwischen 380 und 400 Nanometern aufweist.

12. Additivfertigungseinrichtung nach Anspruch 9, wobei die Anordnung von LEDs in einem bewegbaren Schlitten enthalten ist, der angeordnet ist, um sich relativ zu dem Aufbaubereich zu bewegen.

13. Additivfertigungseinrichtung nach Anspruch 9, das einen Druckkopf zum selektiven Abscheiden des Schmelzmittels umfasst, wobei der Druckkopf kommunikativ an die Steuerung gekoppelt ist, wobei die Steuerung dazu ausgelegt ist:
die LEDs in dem ausgewählten Anordnungssegment als Reaktion auf eine Bestimmung, dass der identifizierte Abschnitt der Schicht aus Partikelmaterial vorgewärmt ist, zu deaktivieren;
zu bewirken, dass der Druckkopf das Schmelzmittel auf den vorgewärmten Abschnitt der Schicht aus Partikelmaterial abscheidet; und
die LEDs in dem ausgewählten Anordnungssegment zu reaktivieren, um das abgeschiedene Schmelzmittel zu erwärmen und ein Schmelzen des identifizierten Abschnitts der Schicht aus Partikelmaterial zu ermöglichen.

14. Additivfertigungseinrichtung nach Anspruch 9, wobei das Schmelzmittel ein Farbpigment umfasst.

15. Nichtflüchtiges maschinenlesbares Medium, das Anweisungen umfasst, die, wenn sie in einen Speicher geladen und von der Steuerung (160) des Additivfertigungssystems nach Anspruch 9 ausgeführt werden, das System veranlassen zum:
Identifizieren eines Abschnitts (130) einer Schicht aus Partikelmaterial (120), auf den Schmelzmittel abgeschieden werden soll, der in einem Aufbaubereich (110) enthalten ist;
Auswählen eines ersten Anordnungssegments (240) aus der Vielzahl von Anordnungssegmenten (151 bis 157) auf der Grundlage des identifizierten Abschnitts (130); und
Verursachen einer Aktivierung von LEDs in dem ausgewählten Anordnungssegment, um mindestens den identifizierten Abschnitt (130) vor der Abscheidung eines Schmelzmittels auf den identifizierten Abschnitt (130) vorzuwärmen, wobei ein zweites Anordnungssegment (250) nicht aktiviert wird, so dass LED-Beleuchtung nicht über die gesamte Schicht aus Aufbaumaterial angewendet wird.

## Revendications

1. Procédé (300) de production d'un objet tridimensionnel, le procédé comprenant :
la formation (310) d'une couche de matériau de fabrication ;
la commande (320) d'un réseau (220) de sources de chaleur afin de chauffer sélectivement une sous-région de la couche de matériau de fabrication en activant une première pluralité de segments (240) du réseau (220), la sous-région comportant une zone sur laquelle un agent de fusion doit être déposé et chaque source de chaleur pouvant être adressée individuellement dans le réseau (220) pour émettre un rayonnement indépendamment de toute autre source de chaleur dans le réseau (220), dans lequel chaque source de chaleur comprend un diode électroluminescente, DEL, dans lequel une seconde pluralité de segments (250) du réseau (220) n'est pas activée de telle sorte que l'éclairage par DEL ne soit pas appliqué sur toute la couche de matériau de fabrication ;
le dépôt (330) d'un agent de fusion sur au moins une partie de la sous-région chauffée ; et
l'application (340) d'une énergie au moins à l'agent de fusion déposé pour permettre la fusion d'un matériau de fabrication afin de fabriquer une couche de l'objet tridimensionnel.

2. Procédé selon la revendication 1, dans lequel chaque source de chaleur comprend une pluralité de DEL.

3. Procédé selon la revendication 1, dans lequel la DEL est une DEL ultraviolette, DEL-UV.

4. Procédé selon la revendication 1, dans lequel chaque source de chaleur dans le réseau de sources de chaleur comprend un même nombre de DEL.

5. Procédé selon la revendication 1, dans lequel la commande du réseau de sources de chaleur comprend :
l'obtention de données représentatives d'une couche de l'objet tridimensionnel à fabriquer ;
la sélection d'une source de chaleur parmi le réseau de sources de chaleur sur la base des données obtenues ; et
l'activation de la source de chaleur sélectionnée et la non-activation d'une autre source de chaleur dans le réseau afin de chauffer sélectivement la sous-région de la couche de matériau de fabrication avant de déposer l'agent de fusion.

6. Procédé selon la revendication 1, comprenant le dépôt de l'agent de fusion sur une première partie de la sous-région chauffée et non sur une seconde partie de la sous-région chauffée.

7. Procédé selon la revendication 1, dans lequel l'application d'une énergie à l'agent de fusion déposé comprend la commande du réseau de sources de chaleur afin de chauffer l'agent de fusion déposé.

8. Procédé selon la revendication 1, le procédé comprenant :
l'application d'une première quantité de rayonnement pour chauffer la sous-région avant de déposer l'agent de fusion ; et
l'application d'une seconde quantité de rayonnement pour chauffer l'agent de fusion déposé, la seconde quantité de rayonnement étant supérieure à la première quantité de rayonnement.

9. Appareil de fabrication additive (100) comprenant :
un réseau (150) de diodes électroluminescentes, DEL, le réseau (150) comprenant une pluralité de segments de réseau (151 à 157), chaque segment de réseau pouvant être commandé indépendamment de tout autre segment de réseau ; et
un dispositif de commande (160) pour :
identifier une partie (130) d'une couche de matériau particulaire (120) sur laquelle un agent de fusion doit être déposé, contenu dans une zone de fabrication (110) ;
sélectionner un segment de réseau parmi la pluralité de segments de réseau (151-157) sur la base de la partie (130) identifiée ; et
provoquer l'activation de DEL dans le segment de réseau sélectionné afin de préchauffer au moins la partie (130) identifiée avant le dépôt d'un agent de fusion sur la partie (130) identifiée, dans lequel un second segment de réseau (250) n'est pas activé de telle sorte que l'éclairage DEL ne soit pas appliqué sur toute la couche de matériau de fabrication.

10. Appareil de fabrication additive selon la revendication 9, dans lequel une DEL donnée dans le réseau de DEL comprend une DEL ultraviolette, DEL-UV.

11. Appareil de fabrication additive selon la revendication 10, dans lequel la DEL-UV a une longueur d'onde d'émission de pic comprise entre 380 et 400 nanomètres.

12. Appareil de fabrication additive selon la revendication 9, dans lequel le réseau de DEL est compris dans un chariot mobile disposé pour se déplacer par rapport à la zone de fabrication.

13. Appareil de fabrication additive selon la revendication 9, comprenant une tête d'impression pour déposer sélectivement l'agent de fusion, la tête d'impression étant couplée de manière communicative au dispositif de commande, dans lequel le dispositif de commande doit :
désactiver les DEL dans le segment de réseau sélectionné en réponse à une détermination du fait que la partie identifiée de la couche de matériau particulaire est préchauffée ;
amener la tête d'impression à déposer l'agent de fusion sur la partie préchauffée de la couche de matériau particulaire ; et
réactiver les DEL dans le segment de réseau sélectionné pour chauffer l'agent de fusion déposé et permettre la fusion de la partie identifiée de la couche de matériau particulaire.

14. Appareil de fabrication additive selon la revendication 9, dans lequel l'agent de fusion comprend un pigment de couleur.

15. Support lisible par machine non transitoire comprenant des instructions qui, lorsqu'elles sont chargées en mémoire et exécutées par le dispositif de commande (160) du système de fabrication additive selon la revendication 9, amènent le système à :
identifier une partie (130) d'une couche de matériau particulaire (120) sur laquelle un agent de fusion doit être déposé, contenu dans une zone de fabrication (110) ;
sélectionner un premier segment de réseau (240) parmi la pluralité de segments de réseau (151-157) sur la base de la partie (130) identifiée ; et
provoquer l'activation de DEL dans le segment de réseau sélectionné afin de préchauffer au moins la partie (130) identifiée avant le dépôt d'un agent de fusion sur la partie (130) identifiée, dans lequel un second segment de réseau (250) n'est pas activé de telle sorte que l'éclairage DEL ne soit pas appliqué sur toute la couche de matériau de fabrication.
